# EUROPEAN PATENT APPLICATION

(11) **EP 4 467 605 A2**
(43) Date of publication of application: **27.11.2024**
(21) Application number: 24175786.3
(22) Date of filing: 14.05.2024
(51) Int. Cl.: C08L 23/12, C08L 53/02

(54) **IMPACT MODIFIER COMPOSITIONS AND APPLICATIONS THEREOF**

(30) Priority: 16.05.2023 US 202363502426 P
(71) Applicant: Kraton Polymers Nederland B.V., 1322 CE Almere (NL)
(72) Inventor: DHARMARAJAN, Narayanaswami, Houston, Texas 77084 (US); VERVOORT, Freddy, Houston, Texas 77084 (US); TRUONG, Phuc, Houston, Texas 77084 (US)
(74) Representative: Henkel & Partner mbB

(57) **Abstract**

A polyolefin composition is disclosed comprising (A) a polypropylene homopolymer; (B) an impact modifier containing: (a) a first hydrogenated styrenic block copolymer (first HSBC), and (b) at least one polymer selected from (i) a second hydrogenated styrenic block copolymer (second HSBC) and (ii) a polyolefin copolymer; and (C) up to 25 wt.% of at least an additive. Each first HSBC and second HSBC, prior to hydrogenation, has a vinyl content of 70 to 95 wt.% and 0 to 50 wt.%, respectively. The impact modifier has a weight ratio of the first HSBC to the at least one polymer of 1:10 to 10:1. The polyolefin composition shows improved impact resistance and a balance of transparency and other mechanical properties.

## Description

### TECHNICAL FIELD

The disclosure relates to impact modifiers, methods of preparation, and use thereof in polyolefin compositions.

### BACKGROUND

Polyolefin based polymers and their compositions are used in large quantity. Among polyolefins, polypropylene compositions have many applications including packaging materials, machine parts, automobile parts, electrical appliances, etc. Such compositions need to have better mechanical properties, flexibility, scratch resistance, processability, heat resistance, etc., for desired end use applications. Impact resistance is an important property to have in the composition to compete with engineering thermoplastics.

To enhance the impact resistance of compositions containing polypropylene, impact modifiers such as rubbery materials have been used. By incorporating rubbery materials, impact resistance can be achieved with the cost of reduction in stiffness, flowability, transparency, etc. In order to improve the impact resistance of polyolefin compositions, impact modifiers based on styrenic block copolymers (SBC) have been used.

There is still a need to provide an improved polypropylene composition with SBC having improved impact resistance and a good balance of transparency, high stiffness, tensile strength, flow properties, etc.

### SUMMARY

In one aspect, the disclosure relates to a polyolefin composition comprises, consists essentially of, or consists of: (A) 65 to 99 wt.% of a polypropylene homopolymer having a melt flow rate (MFR) of 0.25 to 100 dg/minutes measured at 230°C with 2.16 kg load, according to ASTM D1238; (B) 1 to 35 wt.% of an impact modifier consisting essentially of: (a) a first hydrogenated styrenic block copolymer (first HSBC) and (b) at least one polymer selected from (i) a second hydrogenated styrenic block copolymer (second HSBC) and (ii) a polyolefin copolymer (POLC), and (C) up to 25 wt.% of at least an additive, based on total weight of the polyolefin composition. The first HSBC has a block A and a block B. Prior to hydrogenation, each block A is a polymer block of a vinyl aromatic monomer, and each block B is a polymer block of a conjugated diene monomer. The block B has a vinyl content of 70 to 95 wt.%, based on total weight of polymerized conjugated diene monomers in the block B. The second HSBC has a block A' and a block B'. Prior to hydrogenation, each block A' is a polymer block of a vinyl aromatic monomer, and each block B' is a polymer block of a conjugated diene monomer. The block B' has a vinyl content of 0 to 50 wt.%, based on total weight of polymerized conjugated diene monomers in the block B'. The polyolefin copolymer has a density of 0.850 to 0.920 g/cm³ measured according to ASTM D792 and a melt index (MI) of 0.5 to 100 dg/minutes measured at 190°C with 2.16 kg load according to ASTM D1238. A weight ratio of (a) to (b) is from 1:10 to 10:1. When the at least one polymer is the second HSBC, at least one of the first or the second HSBC has a polystyrene content (PSC) of 15 to 50 wt.%.

In a second aspect, the polyolefin composition, when compared to a polyolefin composition in absence of the impact modifier, has: (i) > 5% increase in a flexural secant modulus at 1% and (ii) < 10% reduction in transmittance measured with a sample thickness of 1.6 mm; or (iii) > 10% increase in a Notched Charpy Impact measured at 0°C and (iv) < 5% reduction in transmittance measured with a sample thickness of 1.6 mm; or (v) > 5% increase in a Notched Charpy Impact measured at 21°C and (vi) < 10% reduction in transmittance measured with a sample thickness of 1.6 mm; or (vii) > 10 % increase in a Notched Izod Impact measured at 21°C and (viii) < 5 % reduction in transmittance measured with a sample thickness of 1.6 mm; or (ix) > 10% increase in a strain at yield and (x) < 5% reduction in transmittance measured with a sample thickness of 1.6 mm; or (xi) > 5% increase in an elongation at break and (xii) < 5% reduction in transmittance measured with a sample thickness of 1.6 mm. The flexural secant modulus at 1% is measured according to ASTM D790. The Notched Charpy Impact measured at 0°C and the Notched Charpy Impact measured at 21°C both are according to ASTM D610. The Notched Izod Impact is measured at 21°C according to ISO 180. The strain at yield is measured according to ISO 527-2. The elongation at break is measured according to ISO 527-2. The transmittance is measured according to ASTM D1003.

In a third aspect, the at least one polymer is a second hydrogenated styrenic block copolymer.

In a fourth aspect, each block A and A', independently, has a molecular weight (Mₚ) of 1 to 40 kg/mol, measured according to ASTM 5296.

### DESCRIPTION

The following terms will be used throughout the specification.

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Polystyrene content" or PSC of a block copolymer refers to the weight % of polymerized vinyl aromatic monomers, e.g., styrene in the block copolymer, calculated by dividing the sum of molecular weight of all vinyl aromatic units by total molecular weight of the block copolymer. PSC can be determined using any suitable methodology such as proton nuclear magnetic resonance (NMR).

"Vinyl content" refers to the content of a conjugated diene monomer that is polymerized via 1,2-addition in the case of butadiene, or via 3,4-addition in the case of isoprene, resulting in a monosubstituted olefin, or vinyl group, adjacent to the polymer backbone. Vinyl content can be measured by nuclear magnetic resonance spectrometry (NMR).

"Molecular weight" or Mw refers to the polystyrene equivalent molecular weight in kg/mol of a polymer block or a block copolymer. Mw can be measured with gel permeation chromatography (GPC) using polystyrene calibration standards, such as is done according to ASTM 5296. The GPC detector can be an ultraviolet or refractive index detector or a combination thereof. The chromatograph is calibrated using commercially available polystyrene molecular weight standards. Mw of polymers measured using GPC so calibrated are polystyrene equivalent molecular weights or apparent molecular weights. Mw expressed herein is measured at the peak of the GPC trace and are commonly referred to as polystyrene equivalent "peak molecular weight," designated as Mₚ.

"Bi-modal" molecular weight of a polymer refers to two or more peaks of different molecular weights are readily discernable in a plot of (x) molecular weight as a function of (y) relative proportions of the polymer exhibiting a given molecular weight, such as that obtained by gel permeation chromatography (GPC) analysis of the polymer.

The disclosure relates to a polyolefin composition comprising, consisting essentially of, or consists of: (A) a polypropylene homopolymer; (B) an impact modifier consisting essentially of (a) a first hydrogenated styrenic block copolymer (first HSBC), and (b) at least one polymer selected from: i) a second hydrogenated styrenic block copolymer (second HSBC), and ii) a polyolefin copolymer (POLC); and (C) optional additives. The polyolefin composition shows improved impact resistance and a good balance of transparency, high stiffness, tensile strength, and flow properties.

### (Polypropylene Homopolymer)

The polypropylene homopolymer is a polypropylene homopolymer (e.g., isotactic, syndiotactic, atactic, etc.) made via any processes known in the art. The polypropylene homopolymer can be obtained from the virgin or recycled source and can be based on petroleum or bio source when made first time.

In embodiments, a polypropylene blend is used in the polyolefin composition, e.g., a blend of polypropylene with a random ethylene or butene copolymer of propylene, or a crystalline random copolymer of ethylene and propylene combined with a rubbery ethylene-propylene copolymer. Polypropylene copolymers can be used, including copolymers of propylene with copolymerizable comonomers, e.g., ethylene, 1-butene, 1-pentene, 1-hexene, 1-octene, or one or more conjugated or non-conjugated dienes. The comonomer can be in the range of 0.05 - 40, or 0.5 - 30, or 1 - 20, or 5 - 30 wt.%, based on total weight the polypropylene copolymer.

In embodiments, the polypropylene homopolymer is a bimodal or a multimodal in view of the molecular weight and has a molecular weight (Mₚ) of 10 - 2000, or 30 - 1500, or 50 - 1000, or 100 - 800, or 150 - 500, or 200 - 400 kg/mol.

In embodiments, the polypropylene homopolymer has a melting temperature (Tₘ) of 100 - 180°C, or 110 - 170°C, or 120 - 160°C, or 125 - 150°C.

In embodiments, the polypropylene homopolymer has a crystallinity of 20 - 70%, or 25 - 65%, or 30 - 60%, or 35 - 55%, or > 35%, or > 40%, or > 50%, measured by differential scanning calorimetry (DSC) heat of fusion, according to ASTM F2625.

In embodiments, the polypropylene homopolymer has a melt flow rate (MFR) of < 400, or < 300, or < 200, or 5 -100, or 0.25 - 100, or 0.25 - 75, or 0.50 - 70, or 15 - 65, or 20 - 40 dg/minutes at 230°C with 2.16 kg load, measured according to ASTM D1238.

In embodiments, the polypropylene homopolymer is used in amounts of 65 - 99, or 70 - 99, or 70 - 95, or 75 - 99, or 75 - 90 wt.%, based on total weight of the polyolefin composition.

### (Impact Modifier)

The impact modifier comprises, consists essentially of, or consists of: (a) a first HSBC having a vinyl content, prior to hydrogenation, of 70 to 95 wt.%; and (b) at least one polymer selected from i) a second HSBC having a vinyl content, prior to hydrogenation, of 0 to 50 wt.%, and ii) a POLC; at a weight ratio of the first HSBC to the at least one polymer of 1:10 to 10:1, or 1:8 to 8:1, or 1:5 to 5:1, or 1:2 to 2:1.

### (Hydrogenated Styrenic Block Copolymers (HSBC))

The first HSBC and the second HSBC (if present) is independently obtained by hydrogenation of a SBC precursor, which is any of linear, branched, or radial block copolymer having at least one block A or A', and at least one block B or B'.

In embodiments, the SBC precursor is prepared by anionic polymerization using techniques known in the art. Other methods, such as cationic polymerization, can also be employed. The anionic polymerization initiator is generally an organometallic compound, such as, an organolithium compound, e.g., ethyl-, propyl-, isopropyl-, n-butyl-, sec-butyl-, tert-butyl-, phenyl-, hexylbiphenyl-, hexamethylenedi-, butadieneyl-, isopreneyl-, 1,1-diphenylhexyllithium, or polystyryllithium. An amount of initiator needed is calculated based on the molecular weight to be achieved, generally from 0.002 to 5 wt.%, based on amounts of monomers to be polymerized. Suitable solvent for the polymerization includes aliphatic, cycloaliphatic, or aromatic hydrocarbons having from 4 to 12 carbon atoms, such as pentane, hexane, heptane, cyclopentane, cyclohexane, methylcyclohexane, decalin, isooctane, benzene, alkylbenzenes, such as toluene, xylene or ethylbenzene, and mixtures thereof. Polymer chain termination can be achieved by quenching with a proton donor or a compound having a leaving group that can be displaced by the carbanionic polymer chain.

In embodiments, the SBC precursor has a general configuration of: A-B-A, B-A-B, A-B-A-B, A-B-A-B-A, (A-B)ₙ, (A-B)ₙ(A), (A-B-A)ₙ, (A-B-A)ₙX, (A-B)ₙX, (B-A-B)ₐX, (A-B-A-B)ₙX, (A-B-A-B-A)ₙX, A'-B'-A', B'-A'-B', A'-B'-A'-B', A'-B'-A'-B'-A', (A'-B')ₙ, (A'-B')ₙ(A'), (A'-B'-A')ₙ, (A'-B'-A')ₙX, (A'-B')ₙX, (B'-A'-B')ₙX, (A'-B'-A'-B')ₙX, (A'-B'-A'-B'-A')ₙX, or mixtures thereof; where n is an integer from 2 to 30; and X is a residue of a coupling agent. Each block A and A' is same or different and independently derived from a vinyl aromatic monomer, and each block B and B' is same of different and independently derived from a conjugated diene monomer.

In embodiments, the coupling agent includes bi- or polyfunctional compounds, for example divinylbenzene, halides of aliphatic or araliphatic hydrocarbons, such as 1,2-dibromoethane, bis(chloromethyl)benzene, silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane (MTMS), methyltriethoxysilane (MTES), tetramethoxysilane (TMOS), dimethyladipate, gamma-glycidoxypropyltrimethoxy silane, and mixtures thereof.

In embodiments, the vinyl aromatic monomer is selected from the group consisting of styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the conjugated diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, each block A and A' independently has a molecular weight (Mₚ) of 1 - 40, or 1 - 35, or 1 - 30, or 1 - 25, or 1 - 20, or 1 - 10, or > 1, or > 2, or < 40, or < 35, or 25 kg/mol.

In embodiments, the block B has a vinyl content of ≥ 70, or > 72, or > 75, or 70 - 95, or 70 - 85, or 75 - 90, or 70 - 80 wt.%, based on total weight of polymerized conjugated diene monomers in the block B.

In embodiments, the block B' has a vinyl content of ≤ 50, or 0 - 50, or 0 - 45, or < 45 wt.%, based on total weight of polymerized conjugated diene monomers in the block B'.

In embodiments, each block B and B' independently has a molecular weight (Mₚ) of 10 - 300, or 20 - 200, or 50 - 200, or 20 - 150 kg/mol.

In embodiments, the first HSBC has a polystyrene content (PSC) of 5 - 50, or 10 - 45, or 5 - 40, or 10 - 40, or 5 - 35, or 10 - 35 wt.%, based on total weight of the first HSBC.

In embodiments with the impact modifier comprising both the first HSBC and the second HSBC, the second HSBC independently has a polystyrene content (PSC) of 5 - 50, or 10 - 45, or 5 - 40, or 10 - 40, or 5 - 35, or 10 - 35 wt.%, based on total weight of second HSBC. Further, the polystyrene content (PSC) in at least one of the first HSBC or the second HSBC is from 15 - 50, or 15 - 35, or 18 - 40 wt.%, based on total weight of each of the first HSBC or the second HSBC.

In embodiments, each first HSBC and second HSBC (if present) independently, has a molecular weight (Mₚ) of 10 - 500, or 20 - 300, or 50 - 250, or 20 - 240, or 40 - 220 kg/mol.

In embodiments, each first HSBC and second HSBC (if present) independently, has a melt flow rate (MFR) at 230°C with 2.16 kg load of at least 1 dg/minutes, or > 2, or > 4, or > 5, or 1 - 40, or 2 - 30, or 4 - 35, or 5 - 35 dg/minutes, measured according to ASTM D 1238.

In embodiments, each first HSBC and second HSBC (if present) has a coupling efficiency (CE) of > 60%, or > 65%, or > 70%, or 60 - 98%, or 65 - 95%.

In embodiments, the first HSBC has a diblock content of < 15, or < 12, or < 10, or 1 - 15, or 1 - 10 wt.%, based on total weight of the first HSBC.

In embodiments, each first HSBC and the second HSBC (if present) independently functionalized with at least one functional group, e.g., a hydroxyl group, an amino group, a carboxyl group, an acid anhydride group, an epoxy group, an isocyanate group, a silanol group, and the like.

### (Polyolefin Copolymer (POLC))

The POLC is selected from the group consisting of a polyolefin elastomer (POE), a polyolefin plastomer (POP), and mixtures thereof.

In embodiments, POE is selected from an ethylene-α-olefin copolymer (EOC), a propylene-α-olefin copolymer (POC), and mixtures thereof. EOC can be a copolymer of ethylene and at least one C₃-C₂₀ α-olefin, and can contain ethylene in amounts of > 50, or > 60, or > 70, or > 80, or > 90, or 50 - 90 wt.%, based on total weight of the EOC. In embodiments, POC is a copolymer of propylene and at least one C₃-C₂₀ α-olefin, and POC contains propylene in amounts of > 50, or > 60, or > 70, or > 80, or > 90, or 50 - 90 wt.%, based on total weight of the POC.

In embodiments, the POLC is a copolymer of ethylene and at least one C₃-C₂₀ α-olefin selected from propylene, isobutylene, 1-butene, 1-hexene, 1-pentene, 4-methyl-1-pentene, 1-heptene, 1-octene, 1-nonene, 1-decene, 1-dodecene, 1-tetradecene, 1-hexadecene, 1-octadecene, 1-eicosene, and the like.

EOC can be selected from ethylene / butene (EB) copolymers, ethylene / hexene-1 copolymers, ethylene / octene copolymers, ethylene / α-olefin / diene modified (EAODM) interpolymers (e.g., ethylene / propylene / diene modified (EPDM) interpolymers, ethylene / propylene / octene terpolymers, etc.), ethylene / propylene copolymer and the like.

Examples of POC include copolymers, e.g., propylene / ethylene, propylene / 1-butene, propylene / 1-hexene, propylene / 4-methyl-1-pentene, propylene / 1-octene, propylene / ethylene / 1-butene, propylene / ethylene / ENB, propylene / ethylene / 1-hexene, propylene / ethylene / 1-octene, propylene / styrene, and propylene / ethylene / styrene.

In embodiments, the POE further comprises C₄-C₁₈ diolefin and / or alkenylbenzene.

In embodiments, the POLC is made in a process using a catalyst selected from the group consisting of metallocene catalysts (or constrained geometry), or Ziegler-Natta catalysts.

In embodiments, the POLC comprises two polyolefin copolymer fractions POLC-1 and POLC-2 in a suitable amount, e.g., 1:10 to 10:1, or 1:5 to 5:1. The POLC can have a bimodal molecular weight distribution. In embodiments, the POLC composition has a weight ratio of a weight-average molecular weight of the high molecular weight (HMW) fraction to a weight-average molecular weight of the low molecular weight (LMW) fraction (M_{w-HMW}/M_{w-LMW} ratio) from 20 - 60, or 25 - 50, or 30 - 40.

In embodiments, the POLC has a density of 0.850 - 0.920, or 0.853 - 0.915, 0.855 - 0.910, or 0.852 - 0.905 g/cm³, measured according to ASTM D792.

In embodiments, the POLC has a melt index at 190°C with 2.16 kg load of 0.5 - 100, or 1 - 80, or 5 - 70, or 5 - 50, or 5 - 40 dg/minutes, measured according to ASTM D1238.

In embodiments, the POLC has a molecular weight (Mₚ) of 20 - 400, or 30 - 350, or 40 - 300, or 50 - 400, or 70 - 350 kg/mol.

In embodiments, the POLC has a polydispersity index (M_{w} / Mₙ) of 1.7 - 3.5, or 1.8-3, or 1.8 - 2.8, or 1.8 - 2.5.

In embodiments, the POLC has a glass transition temperature (T_{g}) of < -10°C, or < -20°C, or < -30°C, or < -50°C.

In embodiments, the POLC has a melting point of > 20°C, or > 30°C, or 20 - 140°C, or 25 - 130°C, or 30 - 125°C.

### (Polyolefin Compositions)

In embodiments, the polyolefin composition contains the impact modifier in amounts of 1 - 35, or 1 - 30, or 5 - 30, or 10 - 30, or 5 - 25 wt.%, based on total weight of the polyolefin composition.

In embodiments, the polyolefin composition, based on total weight of the composition, comprises: 65 - 99 wt.% of a polypropylene homopolymer; 1 - 35 wt.% of an impact modifier comprising: the first HSBC and the second HSBC in a weight ratio of 1:10 to 10:1 or the first HSBC and the POLC in a weight ratio of 1:10 to 10:1; and up to 25 wt.% of optional additives.

### (Optional Additives)

Optional additives are selected from the group consisting of activators, curing agents, stabilizers, neutralizing agents, thickeners, coalescing agents, slip agents, release agents, antimicrobial agents, surfactants, antioxidants, antiozonants, color change pH indicators, plasticizers, tackifiers, film forming additives, dyes, pigments, UV stabilizers, UV absorbers, catalysts, fillers, other resins, redox couples, fibers, flame retardants, viscosity modifiers, wetting agents, deaerators, toughening agents, adhesion promoters, colorants, heat stabilizers, light stabilizers, lubricants, flow modifiers, drip retardants, antiblocking agents, antistatic agents, processing aids, stress-relief additives, blowing agents, foam nucleating agents, weld line strength promoter, and mixtures thereof.

Examples of fillers include sand, talc, dolomite, calcium carbonate, clay, silica, mica, wollastonite, feldspar, aluminum silicate, alumina, hydrated alumina, glass bead, glass microsphere, ceramic microsphere, thermoplastic microsphere, barite, wood flour, glass fibers, wood fibers, carbon fibers, and mixture thereof. The filler can be surface treated before adding into the polyolefin composition.

In embodiments, additives used in the polyolefin composition are up to 25 wt.% or 0.5 - 25, or 0.5 - 20, or 1 - 15, or 0.5 - 10, or > 0.5, or < 20 wt.%, based on total weight of the polyolefin composition.

In embodiments, the polyolefin composition comprises talc in amounts of 0.5 - 15, or 1 - 10, or 3 - 12, wt.%, based on total weight of the polyolefin composition.

In embodiments, the polyolefin composition further comprises an impact modifier other than the impact modifier described above. Examples include ethylenepropylene-diene (EPDM) monomer, ethylene-propylene (EPM) monomer, ethylene-propylene rubber (EPR), elastomeric polyolefins (POE), copolymers and terpolymers based on ethylene and propylene, nitrile-butadiene rubber (NBR), isobutylene (IB), chlorinated rubber, chlorinated polyethylene (CM), isoprene, ethylene-butene, mixtures and derivatives thereof. Other impact modifiers, if present, are in amounts of 0 - 10, or 0.5 - 8, or 1 - 5, or > 1, or < 10 wt.%, based on total weight of the polyolefin composition.

### (Methods of Preparation of Impact Modifier)

The composition can be prepared by using suitable amounts of components and dry blending or dry blending and melt extruding into pellets. The dry blending and melt mixing can be carried out by single or twin-screw extruder.

### (Methods for Processing Polyolefin Compositions / Articles)

The polyolefin composition can be processed according to methods known in the art, with the components combined and blended by melt mixing / extruded into pellets, subsequently forming articles by known techniques, such as injection molding, stretch blow molding, overmolding, rotomolding, thermoforming, casting, extrusion, profile extrusion, and blow molding.

In embodiments, the polyolefin composition is compounded at any temperature of: 80 - 250°C, or 100 - 240°C, or 120 - 220°C, or 150 - 230°C. The various components can be added to and compounded with one another in any order, or simultaneously. In some embodiments the additives are added as a pre-mixed masterbatch. Masterbatches are conveniently formed by melt compounding methods.

### (Properties of Polyolefin Compositions)

The polyolefin composition is characterized as having balanced properties among the flexibility, impact, stiffness, transparency, tensile strength, flow properties, anisotropy, for forming articles.

A polyolefin composition containing: A) 65 to 99 wt.% of a polypropylene homopolymer; B) 1 to 35 wt.% of an impact modifier comprising: the first HSBC and the second HSBC in a weight ratio of 1:10 to 10:1 or the first HSBC and the POLC in a weight ratio of 1:10 to 10:1; and C) up to 25 wt.% of additives, based on total weight of the polyolefin composition, has at least one of the following properties:

A Notched Charpy Impact at 21°C of 28 - 75, or 28 - 72, or 29 - 70, or > 28, or > 30, or < 50 kJ/m²; a Notched Charpy Impact at 0°C of 3 - 20, or 3 - 18, or 3 - 15, > 2, or < 15 kJ/m²; and a Notched Charpy Impact at -20°C of 3 - 10, or 3 - 8, or 3 - 6, or > 3, or < 8 kJ/m²; all measured according to ASTM D610.

A Notched Izod Impact at 21°C of 15 - 50, or 16 - 45, or 17 - 42, or > 18, or < 40 kJ/m²; and a Notched Izod Impact at -20°C of 2 - 10, or 2 - 8, or 3 - 7, or > 2, or < 8 kJ/m²; all measured according to ISO 180.

A transmittance of > 55%, or > 60%, or > 63%, or 50 - 100%, 52 - 95%; and a haze < 100%, or < 98%, or 85 - 99%, or 88 - 98%, all measured with a sample thickness of 3 mm according to ASTM D1003,

A transmittance of > 70%, or > 75%, or 70 - 100%, 75 - 95%; and a haze < 95%, or < 90%, or < 85%, or < 80%, or 60 - 95%, or 60 - 90%, or 60 - 85%, all measured with a sample thickness of 1.6 mm according to ASTM D1003.

A flexural Secant modulus at 1% of 700 - 1200, or 800 - 1100, or 830 - 1150, or > 800, or > 820, or < 1150 MPa, measured according to ASTM D790.

A flexural strength of 25 - 50, or 25 - 45, or 26 - 42, or > 25, or < 40 MPa, measured according to ASTM D790.

A tensile modulus of 900 - 1600, or 920 - 1550, or 940 - 1500, or > 930, or < 1550 MPa, measured according to ISO 527-2.

A stress at yield of 20 - 35, or 21 - 32, or 20 - 30, or > 20, or < 30 MPa, measured according to ISO 527-2.

A strain at yield of 5 - 18%, or 6 - 15%, or > 5%, or < 15%, measured according to ISO 527-2.

An elongation at break of 100 - 400%, or 110 - 370%, or 120 - 350%, or > 110%, or < 350%, measured according to ISO 527-2.

In embodiments, the polyolefin composition has at least one of the following balanced properties, as compared to a polyolefin composition in absence of the impact modifier, with the transmittance property being measured according to ASTM D1003:
(i) > 5% increase in a flexural secant modulus at 1%, and (ii) < 10% reduction in transmittance measured with a sample thickness of 1.6 mm; or
(iii) > 10% increase in a Notched Charpy Impact measured at 0°C, and (iv) < 5% reduction in transmittance measured with a sample thickness of 1.6 mm; or
(v) > 5% increase in a Notched Charpy Impact measured at 21°C, and (vi) < 10% reduction in transmittance measured with a sample thickness of 1.6 mm; or
(vii) > 10 % increase in a Notched Izod Impact measured at 21°C, and (viii) < 5% reduction in transmittance measured with a sample thickness of 1.6 mm; or
(ix) > 10% increase in a strain at yield, and (x) < 5% reduction in transmittance measured with a sample thickness of 1.6 mm; or
(xi) > 5% increase in an elongation at break, and (xii) < 5% reduction in transmittance measured with a sample thickness of 1.6 mm.

### (Applications of Polyolefin Composition)

Polyolefin compositions can be used for making various articles through injection blow molding, injection molding, extrusion blow molding (EBM), coextrusion molding, cast film extrusion, blown film extrusion, injection stretch blow molding (ISBM), rotational molding, thermoforming, thermofusion, foam blow molding, pultrusion, calendaring, additive manufacturing, or other known processing methods.

A hollow article can be formed from the polyolefin composition by either continuous extrusion blow molding or by intermittent extrusion blow molding. In embodiments, the hollow article includes bottles, containers, fuel tanks, drums, etc. Other molded articles include furniture, signage, wheels, toys, gardening products, and the like.

The polyolefin composition can be used in piping, packaging applications, films, geo-membranes, roofing applications, pond liners, caps, and closures as well as core layers of a multilayer polyolefin sheet or film, containers, and household articles, medical molded bodies, bottles, and caps. The polyolefin composition can be used for automotive applications, e.g., interior trim, interior sheathing, door panels, instrument panels, fascia, lift gate, and consoles.

In embodiments, the polyolefin composition is used to prepare textile fibers which then used to form spun bond fiber, staple fiber, multi-fiber yarn, knit fabric, woven fabric, or nonwoven fabric.

### (Examples)

The following examples are intended to be non-limiting.

The components used in examples include:
PP-1 is a polypropylene homopolymer having a MFR of 20 dg/minutes with 2.16 kg load and at 230°C, from Borealis.
POLC-1 is an ethylene-octene copolymer having density of 0.857 g/cm³, MI of 10 dg/minutes (190°C/2.16 kg), T_{g} of -58°C, and melting temperature of 38°C.
POLC-2 is an ethylene-octene copolymer having density of 0.868 g/cm³, MI of 10 dg/minutes (190°C/2.16 kg), T_{g} of -62°C, and melting temperature of 121°C.
POLC-3 is an ethylene-hexene copolymer having density of 0.900 g/cm³, and MI of 10 dg/minutes (190°C/2.16 kg).

Composition details of the first HSBC and the second HSBC are provided in table 1. SEBS stands for poly(styrene-ethylene/butylene-styrene) and SEP stands for poly(styrene-ethylene/propylene).

**Table 1**

| HSBCs | PSC (wt.%) | Block B content (wt.%) | Mol. Wt. (Mₚ) of block A (Kg/mol) | Diblock content (wt.%) | Mol. Wt. (Mₚ) of HSBC (Kg/mol) | CE (%) | Vinyl content (wt.%) |
|---|---|---|---|---|---|---|---|
| First HSBCa (SEBS) | 12.5 | 87.5 | 5.7 | 7 | 203 | 93 | 78 |
| First HSBCb (SEBS) | 18.6 | 81.4 | 6.2 | 7 | 123 | 93 | 78 |
| First HSBCc (SEBS) | 20 | 80 | 5.3 | 7 | 83 | 93 | 78 |

| | | Block B' content (wt.%) | Mol. Wt. (Mₚ) of block A' (Kg/mol) | | | | |
|---|---|---|---|---|---|---|---|
| Second HSBCa (SEP) | 20.5 | 79.5 | 6.5 | - | 103 | | 0 |
| Second HSBCb (SEBS) | 31 | 69 | 5.6 | - | 57.5 | 93 | 38 |
| Second HSBCc (SEBS) | 13.3 | 86.7 | 5.3 | 26 | 145 | 74 | 44 |

### (Examples 1 - 34)

Polyolefin compositions were prepared by dry blending components and then compounding in a 25 mm twin extruder using a batch size of 5 lbs. The melt temperature was maintained at about 245°C. Test specimens for various measurements were prepared by injection molding with holding time of around 6 seconds and cooling time of about 30 seconds. Polyolefin compositions and mechanical properties of examples 1 - 34 are presented in tables 2 to 6.

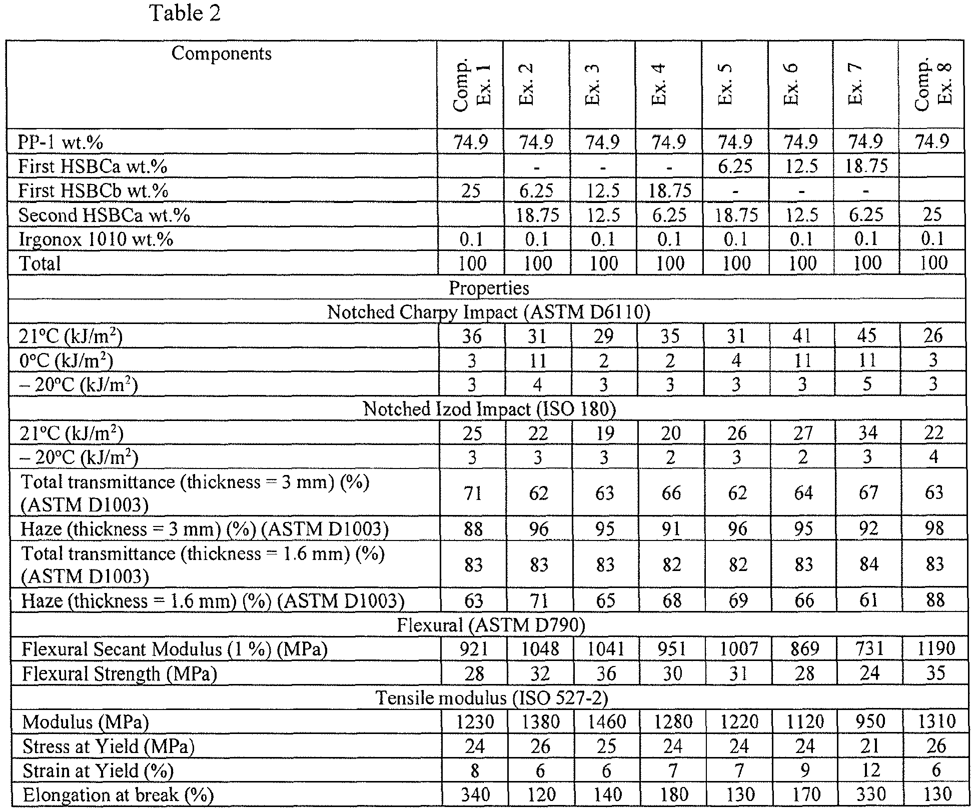

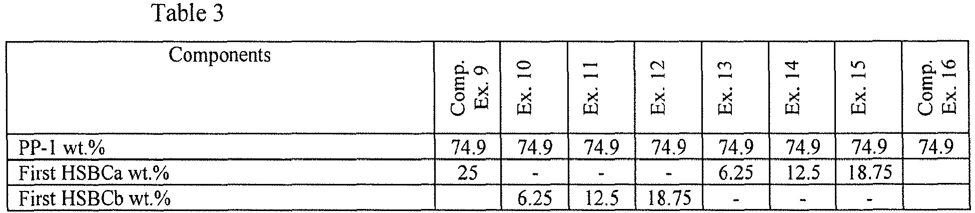

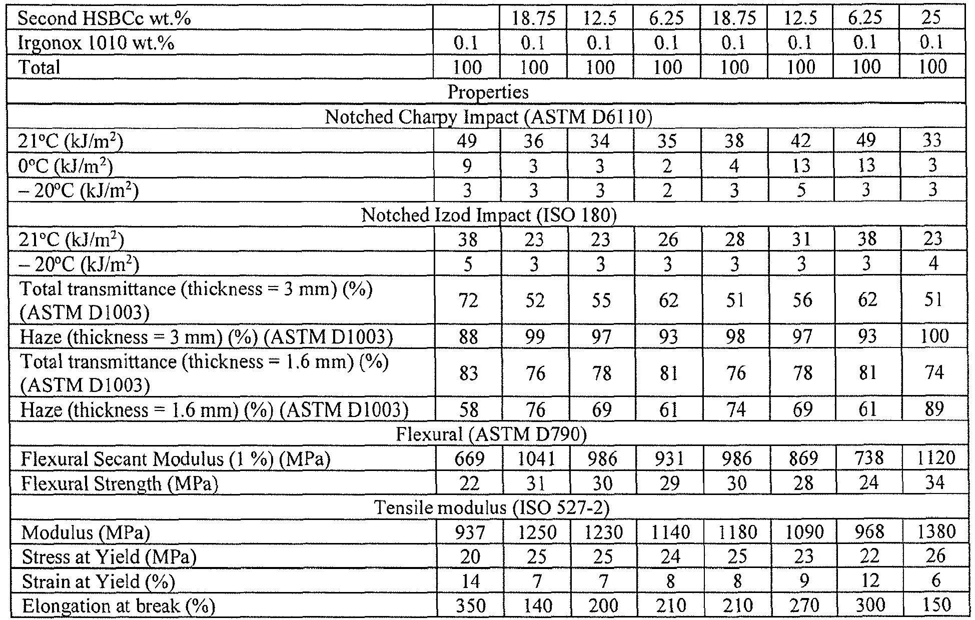

**Table 4**

| Components | Comp. Ex. 17 | Ex. 18 | Ex. 19 | Ex. 20 | Ex. 21 | Ex. 22 | Ex. 23 |
|---|---|---|---|---|---|---|---|
| PP-1 wt.% | 74.9 | 74.9 | 74.9 | 74.9 | 74.9 | 74.9 | 74.9 |
| POLC-1 wt.% | 25 | 6.25 | 12.5 | 18.75 | 6.25 | 12.5 | 18.75 |
| First HSBCa wt.% | - | 18.75 | 12.5 | 6.25 | - | - | - |
| First HSBCc wt.% | - | - | - | - | 18.75 | 12.5 | 6.25 |
| Irganox 1010 wt.% | 0.1 | 0.1 | 0.1 | 0.1 | 0.1 | 0.1 | 0.1 |
| Total | 100 | 100 | 100 | 100 | 100 | 100 | 100 |

| Properties | | | | | | | |
|---|---|---|---|---|---|---|---|
| Notched Charpy Impact ASTM D6110 | | | | | | | |
| 21°C (kJ/m²) | 33 | 36 | 17 | 18 | 11 | 10 | 13 |
| 0°C (kJ/m²) | 7 | 9 | 10 | 9 | 6 | 5 | 7 |
| - 20°C (kJ/m²) | 6 | 4 | 4 | 7 | 4 | 4 | 5 |

| Notched Izod Impact ISO 180 | | | | | | | |
|---|---|---|---|---|---|---|---|
| 21°C (kJ/m²) | 19 | 41 | 40 | 18 | 13 | 13 | 15 |
| - 20°C (kJ/m²) | 4 | 4 | 6 | 7 | 4 | 5 | 7 |
| Total transmittance (thickness = 2.0 mm) (%) (ASTM D1003) | 59 | 73 | 68 | 63 | 75 | 69 | 63 |
| Haze (thickness = 2.0 mm) (%) (ASTM D1003) | 100 | 98 | 100 | 100 | 99 | 100 | 100 |
| Total transmittance (thickness = 1.6 mm) (%) (ASTM D1003) | 73 | 82 | 80 | 76 | 84 | 80 | 79 |
| Haze (thickness = 1.6 mm) (%) (ASTM DI003) | 100 | 94 | 100 | 100 | 99 | 100 | 100 |

| Flexural ASTM D790 | | | | | | | |
|---|---|---|---|---|---|---|---|
| 1 % Secant modulus (MPa) | 1180 | 762 | 854 | 966 | 903 | 944 | 945 |
| Flexural Strength (MPa) | 33 | 24 | 26 | 29 | 28 | 30 | 30 |

| Tensile modulus ISO 527-2 | | | | | | | |
|---|---|---|---|---|---|---|---|
| Modulus (MPa) | 1260 | 949 | 994 | 1030 | 1100 | 1130 | 1110 |
| Stress at Yield (MPa) | 24 | 21 | 22 | 23 | 23 | 23 | 23 |
| Strain at Yield (%) | 5 | 12 | 10 | 8 | 8 | 8 | 7 |
| Elongation at break (%) | 130 | 310 | 260 | 180 | 210 | 200 | 150 |

**Table 5**

| Components | Comp. Ex. 24 | Ex. 25 | Ex. 26 | Ex. 27 | Ex. 28 | Ex. 29 | Ex. 30 |
|---|---|---|---|---|---|---|---|
| PP-1 wt.% | 74.9 | 74.9 | 74.9 | 74.9 | 74.9 | 74.9 | 74.9 |
| POLC-2 wt.% | 25 | 6.25 | 12.5 | 18.75 | 6.25 | 12.5 | 18.75 |
| First HSBCa wt.% | - | 18.75 | 12.5 | 6.25 | - | - | - |
| First HSBCc wt.% | - | - | - | - | 18.75 | 12.5 | 6.25 |
| Irganox 1010 wt.% | 0.1 | 0.1 | 0.1 | 0.1 | 0.1 | 0.1 | 0.1 |
| Total | 100 | 100 | 100 | 100 | 100 | 100 | 100 |

| Properties | | | | | | | |
|---|---|---|---|---|---|---|---|
| Notched Charpv Impact ASTM D6110 | | | | | | | |
| 21°C (kJ/m²) | 29 | 50 | 18 | 44 | 13 | 11 | 16 |
| 0°C (kJ/m²) | 7 | 10 | 8 | 9 | 6 | 6 | 8 |
| - 20°C (kJ/m²) | 6 | 4 | 4 | 6 | 4 | 4 | 5 |

| Notched Izod Impact ISO 180 | | | | | | | |
|---|---|---|---|---|---|---|---|
| 21°C (kJ/m²) | 10 | 37 | 39 | 23 | 8 | 8 | 10 |
| - 20°C (kJ/m²) | 4 | 4 | 4 | 5 | 4 | 4 | 5 |
| Total transmittance (thickness = 1.6 mm) (%) (ASTM D1003) | 79 | 83 | 76 | 79 | 84 | 83 | 81 |
| Haze (thickness = 1.6 mm) (%) (ASTM D1003) | 100 | 84 | 94 | 99 | 98 | 97 | 100 |

| Flexural ASTM D790 | | | | | | | |
|---|---|---|---|---|---|---|---|
| 1 % Secant modulus (MPa) | 1020 | 660 | 765 | 872 | 781 | 906 | 901 |
| Flexural Strength (MPa) | 31 | 22 | 25 | 28 | 26 | 28 | 28 |

| Tensile modulus ISO 527-2 | | | | | | | |
|---|---|---|---|---|---|---|---|
| Modulus (MPa) | 1410 | 981 | 1050 | 1100 | 1080 | 1110 | 1130 |
| Stress at Yield (MPa) | 24 | 21 | 22 | 23 | 23 | 23 | 23 |
| Strain at Yield (%) | 2 | 12 | 10 | 7 | 8 | 7 | 6 |
| Elongation at break (%) | 190 | 330 | 230 | 170 | 210 | 150 | 210 |

**Table 6**

| Components | Comp. Ex. 31 | Ex. 32 | Ex. 33 | Ex. 34 |
|---|---|---|---|---|
| PP-1 wt.% | 74.9 | 74.9 | 74.9 | 74.9 |
| POLC-3 wt.% | 25 | 5 | 12.5 | 20 |
| First HSBCa wt.% | - | 20 | 12.5 | 5 |
| Irganox 1010 wt.% | 0.1 | 0.1 | 0.1 | 0.1 |
| Total | 100 | 100 | 100 | 100 |

| Properties | | | | |
|---|---|---|---|---|
| Notched Charpy Impact ASTM D6110 | | | | |
| 21°C (kJ/m²) | 7 | 43 | 14 | 9 |
| - 20°C (kJ/m²) | 3 | 4 | 3 | 3 |

| Notched Izod Impact ISO 180 | | | | |
|---|---|---|---|---|
| 21°C (kJ/m²) | 4 | 32 | 7 | 4 |
| - 20°C (kJ/m²) | 2 | 4 | 3 | 2 |
| Total transmittance (thickness = 3 mm) (%) (ASTM D1003) | 57 | 72 | 74 | 56 |
| Haze (thickness = 3 mm) (%) (ASTM D1003) | 99 | 95 | 93 | 95 |
| Total transmittance (thickness = 1.6 mm) (%) (ASTM D1003) | 82 | 82 | 84 | 84 |
| Haze (thickness = 1.6 mm) (%) (ASTM D1003) | 74 | 67 | 66 | 71 |

| Flexural (ASTM D790) | | | | |
|---|---|---|---|---|
| 1 % Secant modulus (MPa) | 1180 | 701 | 834 | 886 |
| Flexural Strength (MPa) | 38 | 24 | 28 | 30 |

| Tensile modulus (ISO 527-2) | | | | |
|---|---|---|---|---|
| Modulus (MPa) | 1680 | 1120 | 1240 | 1330 |
| Stress at Yield (MPa) | 28 | 28 | 24 | 26 |
| Strain at Yield (%) | 5 | 12 | 9 | 7 |
| Elongation at break (%) | 23 | 150 | 80 | 37 |

As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A polyolefin composition comprising:
(A) 65 to 99 wt.% of a polypropylene homopolymer having a melt flow rate of 0.25 to 100 dg/minutes measured at 230°C with 2.16 kg load, according to ASTM D1238;
(B) 1 to 35 wt.% of an impact modifier consisting essentially of:
(a) a first hydrogenated styrenic block copolymer having a block A and a block B, wherein prior to hydrogenation:
each block A is a polymer block of a vinyl aromatic monomer,
each block B is a polymer block of a conjugated diene monomer, wherein the block B has a vinyl content of 70 to 95 wt.%, based on total weight of polymerized conjugated diene monomers in the block B, and
(b) at least one polymer selected from:
(i) a second hydrogenated styrenic block copolymer having a block A' and a block B', wherein prior to hydrogenation:
each block A' is a polymer block of a vinyl aromatic monomer,
each block B' is a polymer block of a conjugated diene monomer, wherein the block B' has a vinyl content of 0 to 50 wt.%, based on total weight of polymerized conjugated diene monomers in the block B', and
(ii) a polyolefin copolymer having a density of 0.850 to 0.920 g/cm³ measured according to ASTM D792 and a melt flow rate of 0.5 to 100 dg/minutes measured at 190°C with 2.16 kg load according to ASTM D1238,
wherein a weight ratio of (a) to (b) is from 1:10 to 10:1; and
(C) up to 15 wt.% of at least an additive, based on total weight of the polyolefin composition;
when the at least one polymer is the second hydrogenated styrenic block copolymer, at least one of the first and the second hydrogenated styrenic block copolymer has a polystyrene content (PSC) of 15 to 50 wt.%.

2. The polyolefin composition of claim 1, wherein the polyolefin composition when compared to a polyolefin composition in absence of the impact modifier, has:
(i) > 5% increase in a flexural secant modulus at 1% and (ii) < 10% reduction in transmittance; or
(iii) > 10% increase in a Notched Charpy Impact measured at 0°C and (iv) < 5% reduction in transmittance; or
(v) > 5% increase in a Notched Charpy Impact measured at 21°C and (vi) < 10% reduction in transmittance; or
(vii) > 10 % increase in a Notched Izod Impact measured at 21°C and (viii) < 5 % reduction in transmittance; or
(ix) > 10% increase in a strain at yield and (x) < 5% reduction in transmittance; or
(xi) > 5% increase in an elongation at break and (xii) < 5% reduction in transmittance; and
wherein
the flexural secant modulus at 1% is measured according to ASTM D790;
the Notched Charpy Impact measured at 0°C and the Notched Charpy Impact measured at 21°C both are according to ASTM D610;
the Notched Izod Impact is measured at 21°C according to ISO 180;
the strain at yield is measured according to ISO 527-2;
the elongation at break is measured according to ISO 527-2; and
the transmittance is measured with a sample thickness of 1.6 mm according to ASTM D1003.

3. The polyolefin composition of any of claims 1-2, wherein the at least one polymer is a second hydrogenated styrenic block copolymer.

4. The polyolefin composition of any of claims 1-3, wherein each block A and A', independently, has a molecular weight (Mₚ) of 1 to 40 kg/mol, measured according to ASTM 5296.

5. The polyolefin composition of any of claims 1-4, wherein the block B has a vinyl content of 70 to 85 wt.% and the block B' has a vinyl content of 0 to 45 wt.%.

6. The polyolefin composition of any of claims 3-5, wherein one of the first and the second hydrogenated styrenic block copolymer has a polystyrene content of 15 to 50 wt.%; and other one has a polystyrene content of 5 to 50 wt.%.

7. The polyolefin composition of any of claims 3-6, wherein the first hydrogenated styrenic block copolymer has a diblock content of < 15 wt.%.

8. The polyolefin composition of any of claims 1-2, wherein the at least one polymer is a polyolefin copolymer.

9. The polyolefin composition of claim 8, wherein the polyolefin copolymer has a density of 0.853 to 0.915 g/cm³.

10. The polyolefin composition of any of claims 8-9, wherein the polyolefin copolymer has a melt flow rate of 5 to 50 dg/minutes, measured at 190°C with 2.16 kg load.

11. The polyolefin composition of any of claims 8-10, wherein the polyolefin copolymer is a copolymer of ethylene and at least one C₃-C₂₀ α-olefin selected from propylene, isobutylene, 1-butene, 1-hexene, 1-pentene, 4-methyl-1-pentene, 1-heptene, 1-octene, 1-nonene, 1-decene, 1-dodecene, 1-tetradecene, 1-hexadecene, 1-octadecene, 1-eicosene, and mixtures thereof.

12. The polyolefin composition of any of claims 1-11, wherein the polyolefin composition has:
a Notched Charpy Impact measured according to ASTM D610 of:
28 to 75 kJ/m² at 21°C,
3 to 20 kJ/m² at 0°C, and
3 to 10 kJ/m² at -20°C; and
a Notched Izod Impact measured according to ISO 180 of
15 to 50 kJ/m² at 21°C; and
2 to 10 kJ/m² at -20°C.

13. The polyolefin composition of any of claims 1-11, wherein the polyolefin composition has a transmittance of > 70% and a haze of < 95%, both measured according to ASTM D1003 with a sample thickness of 1.6 mm.

14. The polyolefin composition of any of claims 1-11, wherein the polyolefin composition has at least one of:
a flexural Secant modulus at 1% of 700 to 1200 MPa; and
a flexural strength of 25 to 50 MPa,
both are measured according to ASTM D790.

15. The polyolefin composition of any of claims 1-11, wherein the polyolefin composition has at least one of:
a tensile modulus of 900 to 1600 MPa;
a stress at yield of 20 to 35 MPa;
a strain at yield of 5 to 18%; and
an elongation at break of 100 to 400%,
all are measured according to ISO 527-2.
